# EUROPÄISCHE PATENTANMELDUNG

(11) **EP 0 949 440 A1**
(43) Veröffentlichungstag der Anmeldung: **13.10.1999**
(21) Anmeldenummer: 98106231.8
(22) Anmeldetag: 06.04.1998
(51) Int. Cl.: F16L 11/11

(54) **Flexibles Verbindungsformstück für Rohrinstallationen**

(71) Anmelder: Koller, Roman, Bremgarten (AG) (CH); Viau, Walter, 5014 Gretzenbach (CH)
(72) Erfinder: Koller, Roman, Bremgarten (AG) (CH); Viau, Walter, 5014 Gretzenbach (CH)
(74) Vertreter: Ballmer, Ulrich

(57) **Zusammenfassung**

Ein flexibles Verbindungsstück für Rohrinstallationen besteht aus konischen Ringhülsen (1,2). Diese bilden bei gegeneinander gerichteteter Konizität ein Paar und sind mit ihren kleineren Oeffnungsringrändern (3) elastisch miteinander verbunden. Ebenso sind die Paare mit ihren grösseren Oeffnungsringrändern (4) untereinander elastisch verbunden und bilden das Verbindungsformstück (VG). Die Enden dieses Verbindungsformstücks (VG) sind über die kleineren Oeffnungsringränder (3) der Ringhülsen (1,2) mit zylindrischen Rohrabschnitten (5,6) zum Anschluss an feste Rohrinstallationen verbunden.

## Beschreibung

Die Erfindung bezieht sich auf ein flexibles Verbindungsformstück für Rohrinstallationen. Solche Formstücke sind in der Bauweise von flexiblen Kunststoffschläuchen als Zwischenstücke in Abflussleitungen für Waschbecken und auch für Spül- und Waschmaschinen bekannt. Derartige Schläuche sind jedoch in der Regel für eine Anwendung bei der Installationstechnik mit festverlegten Leitungen wegen der, dabei auftretenden grösseren Beanspruchungen nicht geeignet.

Bei der heutigen Arbeitstechnik, z.B. der Verbindung zweier senkrecht versetzt zueinander verlaufenden Fallleitungen ist der Material- und Arbeitsaufwand gross. Allein das genaue Ausmessen der Etagierung mit Messband und Wasserwaage erfordert Fachkenntnisse und Zeit. Der Materialaufwand umfasst mindestens zwei Bögen, die auf die, sich ergebende Neigung zugeschnitten werden müssen, ein Rohrstück und mindestens vier Verbindungselemente. Die Elemente müssen dann zu einem Etagenformstück zusammengesetzt werden.

Der Erfindung liegt die Aufgabe zugrunde, ein Verbindungsformstück zu schaffen, dessen Anwendung den Material- und Arbeitsaufwand erheblich verringert und auch die Vorratshaltung notwendiger Formstücke und Zubehör verkleinert.

Diese Aufgabe wird erfindungsgemäss dadurch gelöst, dass konische Ringhülsen, die bei gegeneinander gerichteter Konizität Paare bildend, mit ihren kleineren Oeffnungsringrändern miteinander und paarweise jeweils mit ihren grösseren Oeffnungsringrändern untereinander elastisch verbunden, das Verbindungsformstück bilden.

Wie die Erfindung weiter vorsieht, können die konischen Ringhülsen eines Paares unterschiedliche Höhen aufweisen und die Konuswinkel der konischen Ringhülsen Grössen zwischen 15° und 25°, vorzugsweise 20° bzw. 25° und 40°, vorzugsweise 30° aufweisen. Die Enden des Verbindungsformstücks bestehen zweckmässig aus zylindrischen Rohrabschnitten, die jeweils mit dem kleineren Oeffnungsringrand der konischen Ringhülsen verbunden sind. Die zylindrischen Rohrabschnitte können für Elektroschweiss-, Stumpfschweiss-, Steck-, Lang-, Uebergangs oder für Schraubmuffenverbindungen geeignet ausgebildet werden. Ringhülsen und Rohrabschnitte werden vorteilhaft aus Polyäthylen hergestellt.

Die so, erfindungsgemäss ausgebildeten Verbindungsformstücke können mit minimalem Zeit- und Materialaufwand eingesetzt werden. So lassen sich zwei, senkrecht zueinander versetzt stehende Fallleitungen, die durch eine Etage verbunden werden müssen einfach montieren. Das Etagierungsformstück kann dabei an seiner Auslauföffnung mit der, von unten stehenden Fallleitung unter Anwendung der bekannten, oben erwähnten Techniken verbunden werden. Das vorbereitete Etagierungsformstück wird dann von Hand in vorgesehene Position eingebracht, um die Verbindung an der Einlauföffnung mit der oben stehenden Fallleitung herzustellen. Der Materialaufwand besteht hier nur aus zwei Verbindungselementen und dem Etagierungsformstück und der Zeitaufwand beträgt nur einen Bruchteil der Zeit, die mit der herkömmlichen Arbeitstechnik benötigt würde.

Die Erfindung wird anhand der, in der Zeichnung dargestellten Ausführungsbeispiele näher erläutert, in der Zeichnung zeigen:
- Fig. 1: ein Verbindungsformstück, vo der Seite gesehen, in zusammengezogenem Zustand,
- Fig.2: das Verbindungsformstück nach Fig. 1 in auseinandergezogenem Zustand,
- Fig.3: die Teilansicht eines Axialschnitts durch Fig.1,
- Fig.4: die Teilansicht eines Axialschnitts durch Fig.2,
- Fig.5: die Seitenansicht eines Verbindungsformstücks mit winklig voneinander weg gerichteten Enden und
- Fig.6: die Seitenansicht eines Verbindungsformstücks mit parallel zueinander versetzten Enden.

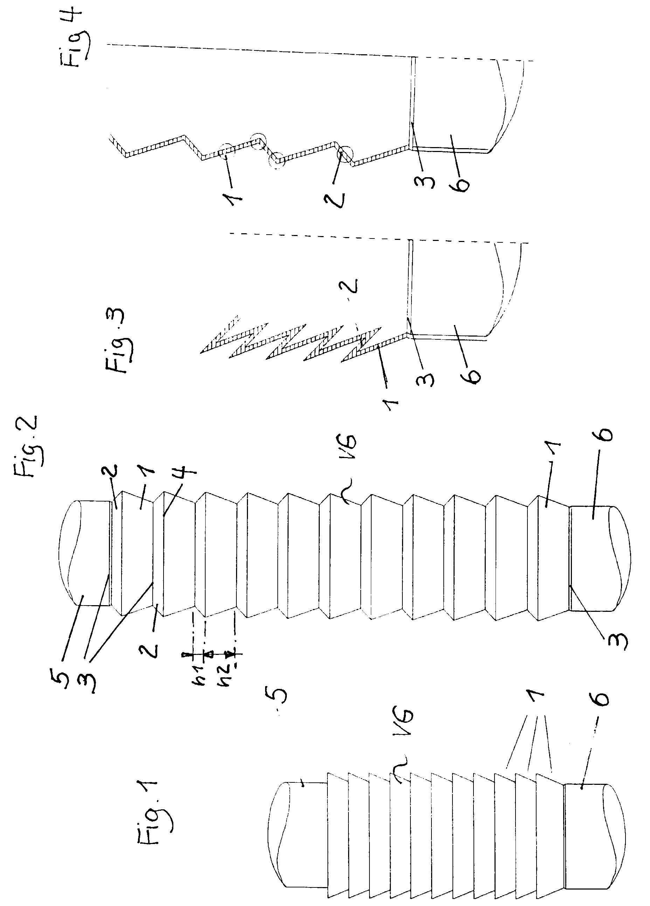

Wie aus den Fig. 1 - 4 zu ersehen, besteht das Verbindungsformstück aus aneinandergereihten konischen Ringhülsen 1 und 2, die, ein Paar bildend, mit ihren, einander zugewandten kleineren Oeffnungsringrändern 3 und paarweise mit ihren grösseren Oeffnungsringrändern 4 elastisch untereinander verbunden sind (Fig. 4) und dabei das flexible Verbindungsformstück bilden. Die konischen Ringhülsen 1,2 weisen beim Ausführungsbeispiel unterschiedliche Höhen h1 und h2 und entsprechend unterschiedliche Konuswinkel auf.

Die Enden des so gebildeten Verbindungsformstücks VG bestehen aus zylindrischen Rohrabschnitten 5,6, die jeweils mit dem kleineren Oeffnungsrand elastisch miteinander verbunden sind.

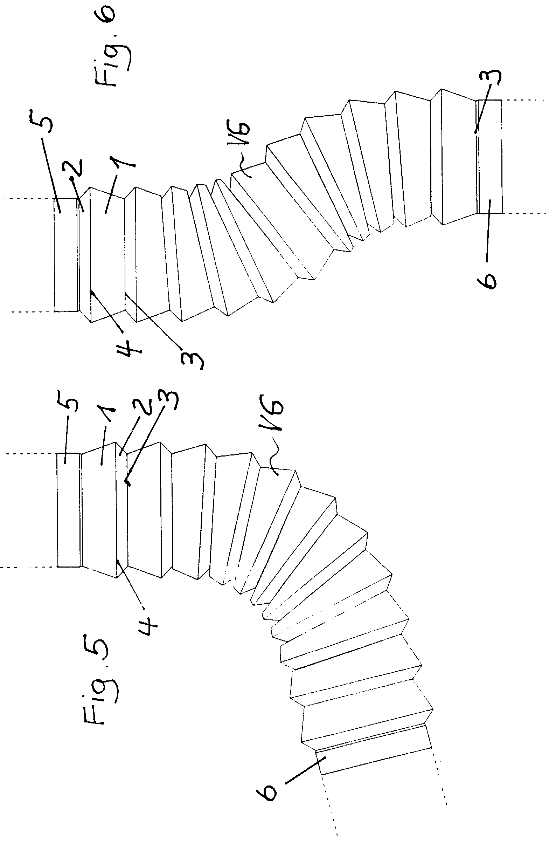

Die Verbindungsformstücke lassen sich, wie ersichtlich, in Richtung ihrer Längsachse zusammendrücken und dadurch verkürzen oder durch Auseinanderziehen verlängern (Fig.1 und 2), um ihre Längsachse drehen und biegen, wie dies aus den Fig. 5 und 6 hervorgeht. Dabei können die Enden 5,6 in jede gewünschte Richtung gebracht und an festverlegte Leitungen angeschlossen werden; sie bilden dann, nach erfolgter Montage ein festes Glied des Rohrsystems. Die Verbindungsformstücke können auch als flexible Schutzrohre zur Führung von anderen Rohrsystemen oder von Kabeln und auch in der Abluft- und Kanalisationstechnik Anwendung finden.

## Patentansprüche

1. Flexibles Verbindungsformstück für Rohrinstallationen,
**dadurch gekennzeichnet,**
dass konische Ringhülsen (1,2), die bei gegeneinander gerichteter Konizität Paare bildend, mit ihren kleineren Oeffnungsringrändern (3) miteinander und paarweise jeweils mit ihren grösseren Oeffnungsringrändern (4) untereinander elastisch verbunden, das Verbindungsformstück (VG) bilden.

2. Flexibles Verbindungsformstück nach Anspruch 1,
**dadurch gekennzeichnet,**
dass die konischen Ringhülsen (1,2) eines Paares unterschiedliche Höhen (h1,h2) aufweisen.

3. Flexibles Verbindungsformstück nach den Ansprüchen 1 oder 2,
**dadurch gekennzeichnet,**
dass die Konuswinkel der konischen Ringhülsen (1,2) zwischen 15 und 25°, vorzugsweise 20° bzw. 25 und 40°, vorzugsweise 30° betragen.

4. Flexibles Verbindungsformstück nach einem der Ansprüche 1-3,
**dadurch gekennzeichnet,**
dass die Enden des Verbindungsformstücks (VG) aus zylindrischen Rohrabschnitten (5,6) bestehen, die jeweils mit dem kleineren Oeffnungsringrand (3) verbunden sind.

5. Flexibles Verbindungsformstück nach Anspruch 4,
**dadurch gekennzeichnet,**
dass die zylindrischen Rohrabschnitte (5,6) für Elektroschweiss-, Stumpfschweiss-, Steck-, Lang-, Uebergangs- oder für Schraubmuffenverbindungen geeignet ausgebildet sind.

6. Flexibles Verbindungsformstück nach einem der Ansprüche 1-5,
**dadurch gekennzeichnet,**
dass die konischen Ringhülsen (1,2) und die Rohrabschnitte (5,6) aus Kunststoff, vorzugsweise Polyäthylen bestehen.
